# EUROPÄISCHE PATENTSCHRIFT

(11) **EP 4 113 161 B1**
(45) Veröffentlichungstag und Bekanntmachung des Hinweises auf die Patenterteilung: **30.07.2025**
(21) Anmeldenummer: 22177874.9
(22) Anmeldetag: 08.06.2022
(51) Int. Cl.: G01S 7/483, G01S 17/894

(54) **KAMERA**
CAMERA
CAMÉRA

(30) Priorität: 28.06.2021 DE 102021116651
(43) Veröffentlichungstag der Anmeldung: 04.01.2023
(73) Patentinhaber: SICK AG, 79183 Waldkirch (DE)
(72) Erfinder: Heinz, Dr. Matthias, 79183 Waldkirch (DE); Braun, Simon, 79108 Freiburg (DE); Emperle, Alexander, 79104 Freiburg (DE); Dieng, Thomas, 79106 Freiburg (DE)

(56) Entgegenhaltungen:
- DE-B4- 102014 105 482
- US-A1- 2015 312 983

## Beschreibung

Die Erfindung betrifft eine Kamera, insbesondere eine 3D-Lichtlaufzeitkamera, gemäß dem Anspruch 1.

Solch eine derartige Kamera arbeitet vorzugsweise nach einem Tastprinzip, bei dem ein Lichtstrahl als Lichtpuls in einen Überwachungsbereich ausgesandt und der von einem Objekt zurückgeworfene Lichtstrahl wieder empfangen wird, um dann das Empfangssignal elektronisch auszuwerten. Hierdurch kann die Kamera einen Abstand messen und gewinnt dadurch eine Tiefeninformation.

Aus den erfassten dreidimensionalen Bilddaten mit Abstands- oder Entfernungswerten für die einzelnen Pixel werden insbesondere ein 3D-Bild, ein Entfernungsbild oder eine Tiefenkarte erzeugt. Zur Ermittlung der Tiefeninformationen sind verschiedene Verfahren bekannt. Dabei wird oft die Lichtlaufzeit mit einem bekannten Phasen- oder Pulsverfahren gemessen, um den Abstand eines angetasteten Objekts zu bestimmen. Diese Verfahren werden auch TOF (Time-Of-Flight) oder LIDAR (Light Detection And Ranging) genannt.

Auf diese Weise gewonnene 3D-Bilddaten können in der Automatisierungstechnik dazu genutzt werden, um sich bewegende Aktoren, wie beispielsweise Roboter oder Fahrzeuge, zu steuern.

Bei Fahrzeugen, die auf öffentlichen Straßen oder in abgeschlossener Umgebung speziell im Bereich der Fabrik- und Logistikautomatik verkehren, soll mit einer 3D-Lichtlaufzeitkamera die gesamte Umgebung und insbesondere ein geplanter Fahrweg möglichst vollständig und dreidimensional erfasst werden. Das betrifft praktisch alle denkbaren Fahrzeuge, seien es solche mit Fahrer wie PKW, LKW, Arbeitsmaschinen und Gabelstapler oder führerlose Fahrzeuge wie AGVs (Automated Guided Vehicle), AGCs (Automated Guided Cart), AMRs (Autonomous Mobile Robot) oder Flurförderfahrzeuge.

Die 3D-Bilddaten werden beispielsweise genutzt, um einen Fahrer zu unterstützen oder die autonome Navigation zu ermöglichen, unter anderem um Hindernisse zu erkennen, Kollisionen zu vermeiden oder das Be- und Entladen von Transportgütern einschließlich Kartons, Paletten, Containern oder Anhängern zu erleichtern.

Bei einem Einsatz von 3D-Lichtlaufzeitkameras in einer der oben genannten mobilen Anwendungen ist ein Energieverbrauch der 3D-Lichtlaufzeitkamera entscheidend für eine Laufzeit des mobilen Fahrzeugs. Hierbei trägt die Beleuchtung der 3D-Lichtlaufzeitkamera zur Generierung der 3D Tiefeninformation und somit auch deren Stromversorgung einen großen Teil zum Energieverbrauch bei.

Bei dem erwähnten TOF Verfahren werden mehrere Messungen zur Phasenschätzung benötigt. Hierzu wird die Beleuchtung kontinuierlich an- und ausgeschaltet, was zu Lastsprüngen in der Energieversorgung der Beleuchtung der 3D-Lichtlaufzeitkamera führt. Durch Auslesen- und Verarbeitungsphasen der Tiefendaten entstehen Beleuchtungspausen, in denen keine oder nur geringe Last in der Energieversorgung der Beleuchtung der 3D-Lichtlaufzeitkamera entsteht.

Um die Energieversorgung der Beleuchtung der 3D-Lichtlaufzeitkamera zu regeln, werden Schaltregler eingesetzt, die in einem kontinuierlichen Modus (auch Continuous-Current-Mode "CCM" genannt) oder in einem diskontinuierlichen Modus (auch Discontinuous-Current-Mode "DCM" genannt) betrieben werden können.

Im kontinuierlichen Modus gewährleistet der Schaltregler eine durchgehende Stromversorgung der Beleuchtung der 3D-Lichtlaufzeitkamera, auch wenn die Beleuchtung der 3D-Lichtlaufzeitkamera kein Lichtpuls aussendet. Im diskontinuierlichen Modus ist der Schaltregler ausgelegt, die Beleuchtung der 3D-Lichtlaufzeitkamera nur zum Aussenden des Lichtpulses mit Strom zu versorgen und außerhalb einer Beleuchtungsphase stromlos zu sein. Hierdurch hat der Schaltregler ein schlechtes Ansprechverhalten auf Lastsprünge, wodurch sich Einbußen bei der Messperformance der 3D-Lichtlaufzeitkamera ergeben.

Aus der DE 102014105482 B4 und US 2015/0312983 A1 sind Steuerschaltungen für die Beleuchtungseinheiten einer Kamera bekannt, mit denen bestimmte Beleuchtungsmodi gesteuert werden können.

Es ist eine Aufgabe der Erfindung, eine Kamera mit einer hohen Bildaufnahme bei gleichzeitigem geringen Energieverbrauch zu schaffen.

Diese Aufgabe wird durch eine Kamera, insbesondere 3D-Lichtlaufzeitkamera, mit den Merkmalen des Anspruchs 1 gelöst. Hierbei umfasst die erfindungsgemäße Kamera, insbesondere 3D- Lichtlaufzeitkamera, eine Beleuchtungseinheit, die Lichtimpulse während einer Beleuchtungsphase aussendet, einen Bildsensor, der aus den von einem Objekt reflektierten Lichtimpulsen Bilder erzeugt, einen Schaltregler, der Strom an die Beleuchtungseinheit regelt, wobei der Schaltregler in einem kontinuierlichen und einem diskontinuierlichen Modus betreibbar ist, und eine Steuereinheit, die ausgebildet ist, den kontinuierlichen Modus des Schaltreglers in Abhängigkeit der Beleuchtungsphase der Beleuchtungseinheit zu aktivieren und zu deaktivieren.

Hierdurch ergibt sich der technische Vorteil, dass eine Versorgungsspannung, die an dem Schaltregler anliegt, sich nicht verändert und sich somit keine unterschiedlichen Versorgungspegel einstellen, da eine Umschaltung von kontinuierlichem Modus zum diskontinuierlichen Modus und umgekehrt innerhalb des Schaltreglers ausgeführt wird.

Dabei aktiviert die Steuereinheit den kontinuierlichen Modus des Schaltreglers vor einem Einschalten der Beleuchtungseinheit und deaktiviert den kontinuierlichen Modus des Schaltreglers nach einem Ausschalten der Beleuchtungseinheit. Auf diese Weise ist es möglich, zu Beginn der Beleuchtungsphase den vollen Strom für die Beleuchtungseinheit zur Verfügung zu stellen, so dass ein gleichbleibendes Beleuchtungsmuster erzielbar ist.

Ebenso aktiviert die Steuereinheit den diskontinuierlichen Modus zwischen zwei Beleuchtungsphasen der Beleuchtungseinheit, wodurch eine Verlustleistung durch den Schaltregler an sich minimiert ist, wobei keine Regelung der Versorgungsspannung des Schaltreglers notwendig ist.

Vorzugsweise besteht die Beleuchtungsphase der Beleuchtungseinheit aus einer Hüllkurve, die in einem Bereich von Mikrosekunden bis Millisekunden liegt und in einem Bereich von Nanosekunden liegenden Lichtimpulse einhüllt. Hierdurch ermöglicht die Aktivierung des kontinuierlichen Modus des Schaltreglers eine Umsetzung eines schnellen Beleuchtungsmusters der 3D-Lichtlaufzeitkamera. Ferner ermöglicht die Aktivierung des diskontinuierlichen Modus zwischen den Beleuchtungsphasen ein hohes Einsparungspotential an Verlustleistung des Schaltreglers.

Gemäß einem bevorzugten Ausführungsbeispiel ist die Steuereinheit in dem Bildsensor integriert vorgesehen, so dass ein kompakter Aufbau der 3D-Lichtlaufzeitkamera möglich ist.

Vorteilhafterweise ist die Steuereinheit zum Steuern der Beleuchtungsphasen der Beleuchtungseinheit vorgesehen. Dies bedeutet, dass eine einzige Steuereinheit zum Steuern des Schaltreglers, der Beleuchtungseinheit und des Bildsensors vorgesehen werden kann, wodurch die Kompaktheit der 3D-Lichtlaufzeitkamera weiter verbessert ist.

Die erfindungsgemäße Kamera kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines bevorzugten Ausführungsbeispiels eines Schaltbildes einer erfindungsgemäßen Kamera, und
- Fig. 2: eine schematische Darstellung eines Betriebsablaufs der erfindungsgemäßen Kamera über die Zeit.

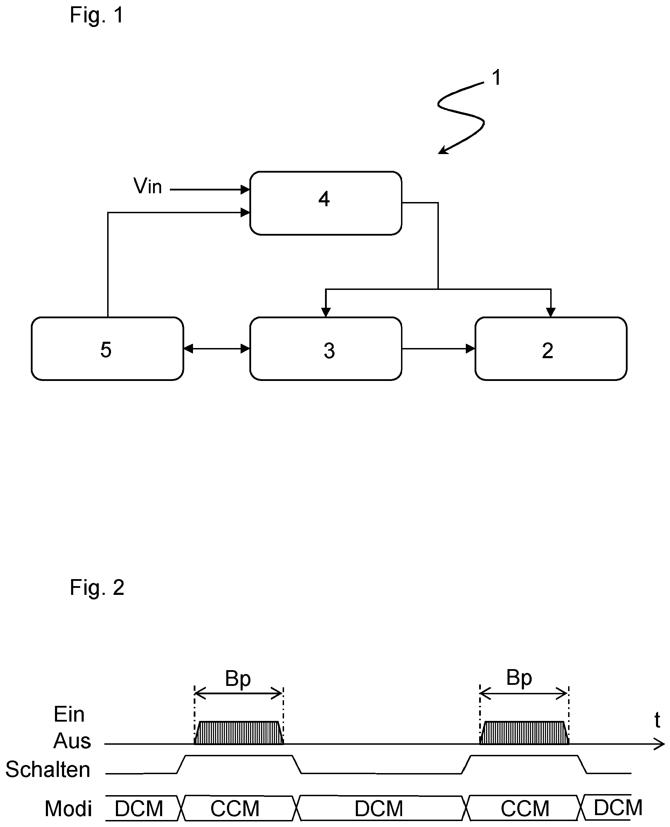

Figur 1 zeigt eine schematische Darstellung eines bevorzugten Ausführungsbeispiels eines Schaltbildes einer erfindungsgemäßen Kamera 1, die insbesondere eine 3D-Lichtlaufzeitkamera umfasst, bei der ein TOF-Erfassungsverfahren angewendet wird.

Die Kamera 1 umfasst eine Beleuchtungseinheit 2, die vorgesehen ist, um während einer (in der Figur 2 dargestellten) Beleuchtungsphase Bp Lichtimpulse zur Beleuchtung eines Überwachungsbereichs auszusenden. Ferner ist ein Bildsensor 3 vorhanden, der aus den von einem, nicht dargestellten Objekt reflektierten Lichtimpulsen Bilder erzeugt. Die Bilder stellen insbesondere ein 3D-Bild, ein Entfernungsbild oder eine Tiefenkarte dar.

Weiterhin umfasst die Kamera 1 einen Schaltregler 4, der Strom an die Beleuchtungseinheit 2 regelt, wobei der Schaltregler 4 in einem kontinuierlichen oder einem diskontinuierlichen Modus CCM bzw. DCM betreibbar ist. Das heißt, der Schaltregler 4 ist derart ausgebildet, dass er zwischen dem kontinuierlichen Modus CCM und dem diskontinuierlichen Modus DCM und umgekehrt geschaltet werden kann.

Erfindungsgemäß umfasst die Kamera 1 eine Steuereinheit 5, die ausgebildet ist, den kontinuierlichen Modus CCM des Schaltreglers 4 in Abhängigkeit der Beleuchtungsphase Bp der Beleuchtungseinheit 2 zu aktivieren und zu deaktivieren. Durch die Aktivierung des kontinuierlichen Modus CCM des Schaltreglers 4, insbesondere unmittelbar vor einem Beginn der Beleuchtungsphase Bp der Beleuchtungseinheit 2, ist der Schaltregler 4 in der Lage, der Beleuchtungseinheit 2 den vollen Strom für die Beleuchtungsphase Bp zur Verfügung zu stellen.

Die Deaktivierung des kontinuierlichen Modus CCM bzw. eine Aktivierung des diskontinuierlichen Modus DCM des Schaltreglers 4 nach der Beleuchtungsphase Bp der Beleuchtungseinheit 2 verhindert eine hohe Verlustleistung in dem Schaltregler 4, da der durch den diskontinuierlichen Modus DCM zur Verfügung gestellte Strom beispielsweise ausreichend für den Bildsensor 3 sein kann, um die erfassten Bilddaten auszuwerten.

Zusätzlich ermöglicht das Schalten intern des Schaltreglers 4 zwischen diesen beiden Modi CCM und DCM, dass eine am Schaltregler 4 anliegende Versorgungsspannung Vin nicht beeinflusst wird.

Wie in der Figur 1 dargestellt, kann der Schaltregler 4 auch dafür vorgesehen sein, Strom an den Bildsensor 3 zu regeln. Hierdurch kann die Steuereinheit 5 den Strom über den Schaltregler 4 einfacher an die Beleuchtungseinheit 2 und an den Bildsensor 3 regeln. Jedoch ist solch eine Auslegung nicht zwingend erforderlich, da eine Stromregelung des Bildsensors 3 unabhängig vom Schaltregler 4 auch vorteilhaft sein kann.

Wie in der Figur 2 dargestellt, läuft ein Betriebsablauf der Kamera 1 bzw. des Schaltreglers 4 der Kamera 1 über die Zeit t wie folgt ab:
Mit Anliegen der Versorgungsspannung Vin befindet sich der Schaltregler 4 in dem diskontinuierlichen Modus DCM. Vor einem Start der Beleuchtungsphase Bp der Beleuchtungseinheit 2 schaltet die Steuereinheit 5 der Kamera 1 den Schaltregler 4 in den kontinuierlichen Modus CCM, so dass mit Beginn der Beleuchtungsphase Bp der Beleuchtungseinheit 2 der volle Strom für die Beleuchtungseinheit 2 zur Verfügung steht, um eine ausreichende und stabile Beleuchtung für eine Erfassung der Bilder durch den Bildsensor 3 zu gewährleisten.

Nach Ende der Beleuchtungsphase Bp der Beleuchtungseinheit 2 deaktiviert die Steuereinheit 5 den kontinuierlichen Modus CCM des Schaltreglers 4 und schaltet den Schaltregler 4 in den diskontinuierlichen Modus DCM. Hierdurch steht kein voller Strombetrag im Schaltregler 4 an, so dass die Verlustleistung vermieden werden kann.

Ferner kann der durch den diskontinuierlichen Modus DCM zur Verfügung gestellte Strom ausreichend für den Bildsensor 3 sein, die erfassten Bilddaten zu verarbeiten und auszuwerten, wodurch eine Verzögerung der Bilderfassung vermieden werden kann. Die Vermeidung der Verzögerung der Bilderfassung ermöglicht eine Verbesserung der Effizienz der Kamera 1.

Zwischen zwei Beleuchtungsphase Bp der Beleuchtungseinheit 2 befindet sich der Schaltregler 4 in dem diskontinuierlichen Modus DCM, so dass die Verlustleistung des Schaltreglers 4 signifikant reduziert werden kann, da diese Zwischenphase wesentlich länger ist als die Beleuchtungsphase Bp, die vorzugsweise durch eine Hüllkurve wiedergegeben ist, die in einem Bereich von Mikrosekunden bis Millisekunden, wie beispielsweise von 500µs, liegt und in einem Bereich von Nanosekunden, wie beispielsweise von 3 ns, liegende Lichtimpulse einhüllt.

Sobald die Steuereinheit 5 die Beleuchtungseinheit 2 direkt oder (wie dargestellt) indirekt über den Bildsensor 3 erneut ansteuert, um die Beleuchtungsphase Bp wieder zu starten, aktiviert die Steuereinheit 5 den kontinuierlichen Modus CCM des Schaltreglers 4, so dass sich der Schaltregler 4 erneut in den kontinuierlichen Modus CCM schaltet und den diskontinuierlichen Modus DCM deaktiviert.

Die Beleuchtungseinheit 2 erhält damit die volle Stromstärke zum Aussenden des Lichtpulses bzw. der Lichtpulse mit dem Start der Beleuchtungsphase Bp. Der Schaltregler 4 weist damit keine Totzeit auf, so dass die Effizienz der Kamera 1 weiter verbessert ist.

### Bezugszeichenliste

- 1: Kamera
- 2: Beleuchtungseinheit
- 3: Bildsensor
- 4: Schaltregler
- 5: Steuereinheit

- Bp: Beleuchtungsphase
- DCM: diskontinuierlicher Modus
- CCM: kontinuierlicher Modus
- t: Zeit
- Vin: Versorgungsspannung

## Patentansprüche

1. Kamera (1), insbesondere 3D- Lichtlaufzeitkamera, mit
einer Beleuchtungseinheit (2), die Lichtimpulse während einer Beleuchtungsphase (Bp) aussendet,
einem Bildsensor (3), der aus den von einem Objekt reflektierten Lichtimpulsen Bilder erzeugt,
einem Schaltregler (4), der Strom an die Beleuchtungseinheit (2) regelt, wobei der Schaltregler (4) in einem kontinuierlichen und einem diskontinuierlichen Modus (CCM; DCM) betreibbar ist, **gekennzeichnet durch** eine Steuereinheit (5), die ausgebildet ist, den kontinuierlichen Modus (CCM) des Schaltreglers (4) in Abhängigkeit der Beleuchtungsphase (Bp) der Beleuchtungseinheit (2) zu aktivieren und zu deaktivieren, wobei die Steuereinheit (5) den kontinuierlichen Modus (CCM) des Schaltreglers (4) vor einem Einschalten der Beleuchtungseinheit (2) aktiviert und nach einem Ausschalten der Beleuchtungseinheit (2) deaktiviert und wobei die Steuereinheit (5) den diskontinuierlichen Modus (DCM) zwischen zwei Beleuchtungsphasen (Bp) der Beleuchtungseinheit (2) aktiviert.

2. Kamera (1) nach einem der vorhergehenden Ansprüche, wobei die Beleuchtungsphase (Bp) der Beleuchtungseinheit (2) durch eine Hüllkurve wiedergegeben ist, die in einem Bereich von Mikrosekunden bis Millisekunden liegt und in einem Bereich von Nanosekunden liegende Lichtimpulse einhüllt.

3. Kamera (1) nach einem der vorhergehenden Ansprüche, wobei die Steuereinheit (5) in dem Bildsensor (3) integriert vorgesehen ist.

4. Kamera (1) nach einem der vorhergehenden Ansprüche, wobei die Steuereinheit (5) zum Steuern der Beleuchtungsphasen (Bp) der Beleuchtungseinheit (2) vorgesehen ist.

## Claims

1. A camera (1), especially 3D time-of-flight camera, with
an illumination unit (2) which emits light pulses during an illumination phase (Bp), an image sensor (3), which generates images from the pulses of light reflected by an object,
a switching regulator (4) which regulates current to the lighting unit (2), wherein the switching regulator (4) is operable in a continuous and a discontinuous mode (CCM; DCM), **characterized by** a control unit (5) which is designed to activate and deactivate the continuous mode (CCM) of the switching regulator (4) depending on the illumination phase (Bp) of the lighting unit (2), wherein the control unit (5) activates the continuous mode (CCM) of the switching regulator (4) before switching on the lighting unit (2) and deactivates it after switching off the lighting unit (2), and wherein the control unit (5) activates the discontinuous mode (DCM) between two lighting phases (Bp) of the lighting unit (2).

2. The camera (1) according to any of the preceding claims, wherein the illumination phase (Bp) of the illumination unit (2) is represented by an envelope which lies in a range of microseconds to milliseconds and envelops light pulses lying in a range of nanoseconds.

3. The camera (1) according to any of the preceding claims, wherein the control unit (5) is intended to be integrated into the image sensor (3).

4. The camera (1) according to any of the preceding claims, wherein the control unit (5) is intended for controlling the illumination phases (Bp) of the illumination unit (2).

## Revendications

1. Caméra (1), en particulier une caméra 3D à temps de vol, avec
une unité d'éclairage (2) qui émet des impulsions lumineuses pendant une phase d'éclairage (Bp),
un capteur d'image (3), qui génère des images à partir des impulsions lumineuses réfléchies par un objet,
un régulateur de commutation (4) qui régule le courant à l'unité d'éclairage (2), dans lequel le régulateur de commutation (4) peut fonctionner en mode continu et discontinu (CCM ; DCM), **caractérisé par** une unité de commande (5) qui est conçue pour activer et désactiver le mode continu (CCM) du régulateur de commutation (4) en fonction de la phase d'éclairage (Bp) de l'unité d'éclairage (2),
dans lequel l'unité de commande (5) active le mode continu (CCM) du régulateur de commutation (4) avant d'allumer l'unité d'éclairage (2) et le désactive après l'arrêt de l'unité d'éclairage (2) et dans lequel l'unité de commande (5) active le mode discontinu (DCM) entre deux phases d'éclairage (Bp) de l'unité d'éclairage (2).

2. Caméra (1) selon l'une des revendications précédentes, dans laquelle la phase d'éclairage (Bp) de l'unité d'éclairage (2) est représentée par une enveloppe qui se situe dans une plage de microsecondes à millisecondes et enveloppe des impulsions lumineuses situées dans une plage de nanosecondes.

3. Caméra (1) selon l'une des revendications précédentes, dans laquelle l'unité de commande (5) est prévue pour être intégrée dans le capteur d'image (3).

4. Caméra (1) selon l'une des revendications précédentes, dans laquelle l'unité de commande (5) est prévue pour commander les phases d'éclairage (Bp) de l'unité d'éclairage (2).
